# FASCICULE DE BREVET EUROPEEN

(11) **EP 4 093 627 B1**
(45) Date de publication et mention de la délivrance du brevet: **31.01.2024**
(21) Numéro de dépôt: 20828539.5
(22) Date de dépôt: 02.12.2020
(51) Int. Cl.: B60K 35/00, B60K 37/02, G02B 27/01

(54) **COMBINÉ D'INSTRUMENTS POUR VÉHICULE AUTOMOBILE À LAME RÉFLÉCHISSANTE**
KOMBIINSTRUMENT EINES KRAFTFAHRZEUGS MIT REFLEKTIERENDEM PANEEL
MOTOR VEHICLE INSTRUMENT CLUSTER WITH REFLECTIVE PANEL

(30) Priorité: 21.01.2020 FR 2000566
(43) Date de publication de la demande: 30.11.2022
(73) Titulaire: Stellantis Auto SAS, 78300 Poissy (FR)
(72) Inventeur: LESBROUSSART, Antoine, 78180 Montigny le Breton-Neux (FR); LAINE, Vincent, 78340 Les Clayes sous Bois (FR); BOUVERET, Thomas, 92370 Chaville (FR); GODART, Guillaume, 78950 Gambais (FR)
(86) Numéro de dépôt international: PCT/FR2020/052239
(87) Numéro de publication internationale: WO 2021/148727

(56) Documents cités:
- WO-A1-2016/092220
- FR-A1- 3 051 406
- FR-A1- 3 074 925
- US-B1- 10 227 007

## Description

### [Domaine technique]

La présente invention concerne un combiné d'instruments pour véhicule automobile.

### [Technique antérieure]

Les combinés d'instruments sont des dispositifs généralement intégrés dans la planche de bord d'un véhicule automobile pour fournir au conducteur une multitude de données relatives au fonctionnement d'un véhicule automobile, telles que par exemple, ses vitesses instantanée et moyenne, son régime moteur, son niveau de carburant ou bien encore sa consommation moyenne. Ils permettent également d'afficher des signaux d'alerte (température moteur excessive, niveau d'huile insuffisant ou encore non fermeture d'une portière) et des témoins signalant l'activation de certains dispositifs du véhicule (clignotants, frein à main, feux de position, de croisement ou de route).

Anciennement composés d'une pluralité de cadrans analogiques à aiguilles associés à des voyants lumineux, ces combinés d'instruments sont aujourd'hui majoritairement constitués par des écrans numériques d'affichage rectangulaires LCD à matrice active (LCD-TFT), du même genre que celles que l'on retrouve sur les téléviseurs et les moniteurs d'ordinateurs.

Ces combinés qui offrent une très bonne qualité d'image en termes de résolution, de contraste et de luminosité, sont en outre configurables par le conducteur du véhicule via des commandes situées sur le volant ou en dessous de la dalle d'affichage. Celui-ci peut donc choisir au moins en partie les modules qu'il souhaite voir s'afficher sur l'écran ainsi que leur style et l'ambiance de fond.

Malheureusement, l'incorporation d'un tel écran plat rectangulaire de grandes dimensions au sein d'une planche de bord induit une limitation conséquente des possibilités de style et impose ainsi un effort d'intégration particulièrement important dans la phase de conception de cette planche de bord.

On connaît également du document FR 3 074 925 A1, un combiné d'instruments pour véhicule automobile comportant un écran d'affichage numérique destiné à être dissimulé des passagers du véhicule et apte à afficher une image source contenant une multitude de modules indicateurs à destination du conducteur dudit véhicule, ainsi qu'une lame opaque réfléchissante située en dessous dudit écran d'affichage numérique et étant inclinée vis-à-vis de ce dernier de manière à réfléchir ladite image source en direction dudit conducteur afin que ce dernier en perçoive dans son champ de vision une image virtuelle située au-devant de ladite lame. On connaît aussi du document FR 3 0510 406 un combiné d'instruments pour planche de bord de véhicule automobile comportant un écran d'affichage numérique et une lame réfléchissante grossissante située en dessous dudit écran d'affichage numérique et étant inclinée vis-à-vis de ce dernier de manière à réfléchir une image en direction d'un conducteur afin que ce dernier en perçoive dans son champ de vision une image virtuelle agrandie située au-delà de ladite lame. On connaît aussi du document WO2016092220 un afficheur tête haute comprenant un générateur d'image (3), une zone d'affichage semi-réfléchissante recevant des faisceaux lumineux dudit générateur d'image, la zone semi-réfléchissante comportant au moins une portion opaque ou pouvant être rendue opaque. On connaît du document US1022700 un tableau de bord composite ayant à la fois un affichage électronique et une plaque de cadran opaque est doté de caractéristiques qui imitent un affichage électronique homogène.

Un tel combiné d'instruments présente l'avantage de pouvoir s'intégrer de manière plus harmonieuse à n'importe quel type de planche de bord de véhicule automobile, puisque la forme et la taille de la lame réfléchissante peuvent être modulées quasiment sans limites pour s'accorder au mieux à la configuration et au style de cette planche de bord.

Le caractère opaque de sa lame permet en outre d'assurer une vision contrastée par le conducteur des informations contenues dans l'image source mais également de dissimuler aux yeux de ce conducteur les moyens de support de cette lame la reliant à la planche de bord du véhicule.

Toutefois, à l'usage le regard du conducteur a tendance à se trouver perturbé par la transition brutale entre la lame opaque et la paroi de fond de la planche de bord situés dans deux plans décalés longitudinalement l'un de l'autre.

### [Exposé de l'invention]

La présente invention vise donc à améliorer la situation.

Elle propose à cet effet un combiné d'instruments pour véhicule automobile comportant un écran d'affichage numérique destiné à être dissimulé des passagers dudit véhicule et étant apte à afficher une image source contenant une multitude de modules indicateurs à destination du conducteur dudit véhicule, ainsi qu'une lame située en dessous dudit écran d'affichage numérique et dont au moins les portions principale centrale et supérieure sont opaques et réfléchissantes, ladite lame étant inclinée vis-à-vis dudit écran d'affichage de manière à réfléchir ladite image source en direction dudit conducteur afin que ce dernier en perçoive dans son champ de vision une image virtuelle située au devant de ladite lame, caractérisé en ce que les portions latérales et inférieure de ladite lame sont transparentes.

Le fait que les portions latérales et inférieure de la lame soient transparentes permet d'obtenir une transition moins marquée entre la lame de ce combiné et la paroi de fond de la planche de bord située au devant de cette lame, tout en donnant à cette même lame une impression de flottabilité particulièrement esthétique.

Ces portions latérales et inférieure permettent en outre de mettre en valeur le revêtement de la paroi de fond de cette planche de bord dont une surface plus importante est visible par le conducteur.

Selon des caractéristiques préférées dudit combiné d'instruments selon l'invention :
- lesdites portions latérales et inférieure transparentes présentent une largeur d'au moins 20 mm ;
- lesdites portions latérales et inférieure transparentes sont séparées de ladite portion principale centrale opaque par des zones de transition dont le degré d'opacité varie selon un dégradé allant du transparent à l'opaque ;
- ledit combiné également un châssis comprenant une embase portant ledit écran d'affichage numérique ainsi qu'un support relié à ladite embase et portant ladite lame, ledit support s'étendant au devant et en regard des portions principale centrale et supérieure opaques de ladite lame de sorte à demeurer invisible pour le conducteur ;

- lesdites portions latérales et inférieure de ladite lame sont également réfléchissantes ;
- ledit combiné comporte une pluralité de symboles informatifs transparents ménagés sur la portion supérieure opaque de ladite lame, ainsi que des moyens d'éclairage apposés contre la face avant de cette portion supérieure opaque de ladite lame de sorte à réaliser un rétro-éclairage desdits symboles informatifs ;
- ladite lame est formée par un substrat translucide portant un revêtement opaque sur sa face avant et un revêtement réfléchissant sur sa face arrière ;
- lesdits symboles informatifs transparents sont réalisés par grattage ou ablation laser dudit revêtement opaque ; et/ou
- ledit combiné comporte également des modules d'affichage latéraux complémentaires agencés sur une paroi de fond de la planche de bord située au devant de ladite lame, de sorte à être visibles par ledit conducteur du véhicule au travers des deux dites portions latérales transparentes de cette lame.

L'invention vise également sous un second aspect un véhicule automobile comportant un tel combiné d'instruments.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] représente une vue schématique en coupe d'un combiné d'instruments numérique selon l'invention intégré dans la planche de bord d'un véhicule automobile ; et
[Fig 2] est une vue de face de la lame que comporte le combiné d'instruments numérique selon l'invention.

### [Description détaillée]

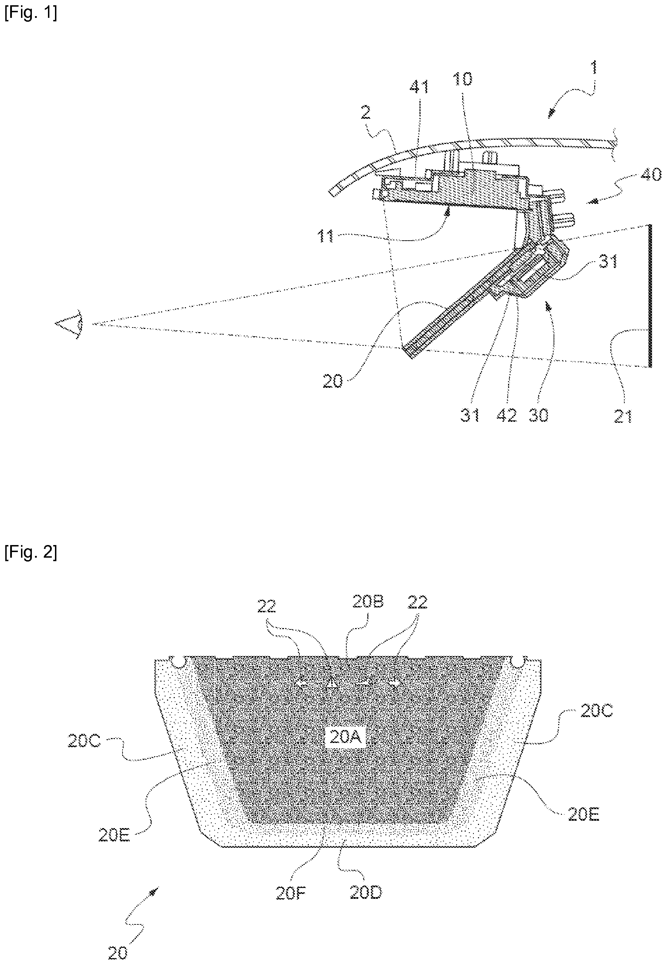

Le combiné d'instruments numérique 1 représenté sur la figure 1 est destiné à être intégré à la planche de bord d'un véhicule automobile dans l'axe du volant afin fournir au conducteur une multitude de données relatives au fonctionnement de ce véhicule (par exemple, ses vitesses instantanée et moyenne, son régime moteur, son niveau de carburant ou bien encore sa consommation moyenne) mais également d'afficher des signaux d'alerte (température moteur excessive, niveau d'huile insuffisant ou encore non fermeture d'une portière) et des témoins signalant l'activation de certains dispositifs du véhicule (clignotants, frein à main, feux de position, de croisement ou de route).

Dans la description qui va suivre et par convention, les termes « inférieur », « supérieur », « longitudinal » et « latéral » seront définis par rapport à la position de montage de ce combiné d'instruments 1 sur un tel véhicule.

Par ailleurs, l'emploi du terme « sensiblement » indique qu'un léger écart est admis par rapport à une position ou disposition nominale prédéterminée, tout en restant inclus dans le cadre de l'invention. Par exemple, « sensiblement horizontal » indique qu'un écart de l'ordre de 10 à 15° par rapport à une orientation strictement horizontale est admis dans le cadre de l'invention.

Le combiné d'instruments numérique 1 comporte un écran d'affichage numérique 10, une lame réfléchissante 20 et des moyens d'éclairage 30.

Tel qu'illustré sur la figure 1, l'écran d'affichage numérique 10 s'étend sensiblement horizontalement sous la casquette 2 de la planche de bord du véhicule de sorte à être dissimulé aux yeux du conducteur du véhicule, avec sa face d'affichage qui est orientée vers le plancher de ce véhicule.

Cet écran d'affichage 10 est constitué avantageusement par une dalle rectangulaire à cristaux-liquides et à matrice de transistors en film mince, désignée communément sous l'acronyme anglais TFT LCD (pour « thin- film-transistor liquid-crystal display »). Ce type d'écran présente en effet un faible coût de revient ainsi qu'une luminosité suffisamment élevée pour la mise en oeuvre de l'invention.

En variante, l'écran d'affichage 10 pourrait être constitué par une dalle à matrice active à diodes électroluminescentes organiques, désignée communément sous l'acronyme anglais AMOLED (pour « Active-Matrix Organic Light-Emitting Diode ») ou bien encore par une dalle à encre électronique.

L'écran d'affichage numérique 10 est relié à un calculateur graphique, non représenté sur les figures, qui lui transmet en temps réel une image source 11 comprenant d'un certain nombre de modules indicateurs (module central de vitesse instantanée, module radio FM, module jauge de carburant, module compte tours, etc...) dessinés dans un certain style (par exemple « classique » reproduisant l'affichage des cadrans analogiques ou bien « digital » dans lequel l'ensemble des informations sont affichées sous la forme de nombres digitaux).

Cette image source 11 qui n'est pas directement visible par le conducteur de par l'agencement de l'écran 10, est actualisée en temps réel en fonction de révolution des données recueillies par le boîtier de servitude intelligent (BSI) du véhicule auquel ce calculateur graphique est relié. Elle est également configurable par le conducteur du véhicule à l'aide de commandes situées par exemple sur le volant, de sorte que ce dernier peut sélectionner au moins partiellement les modules indicateurs à afficher et choisir le style à leur appliquer.

Située dans l'axe de vision du conducteur et en dessous de l'écran d'affichage numérique 10, la lame réfléchissante 20 est inclinée d'un angle aigu compris entre 30 et 60° (avantageusement égale à 45°) vis-à-vis de l'écran 10 de manière à réfléchir l'image source 11 s'affichant sur cet écran en direction du conducteur afin que ce dernier en perçoive alors une image virtuelle 21 dans son champ de vision au devant de cette lame réfléchissante 20 et étant inclinée du même angle par rapport à cette dernière (cette image virtuelle 21 s'étendant ainsi sensiblement horizontalement lorsque l'angle d'inclinaison entre l'écran 10 été la lame 20 est égal à 45° tel qu'illustré sur la figure 1).

En variante, la lame peut être incurvée afin de modifier l'angle de réflexion des rayons lumineux incidents provenant de l'image source de sorte à moduler la taille et le plan d'affichage de l'image virtuelle.

Représentée seule sur la figure 2, la lame 20 qui présente ici une forme de trapèze isocèle est formée par un substrat transparent portant un revêtement noir opaque sur sa face avant et un revêtement réfléchissant sur sa face arrière.

Le substrat transparent est venu avantageusement de moulage à partir d'un matériau thermoplastique tel que le polyméthacrylate de méthyle (PMMA) ou le polycarbonate (PC). Il peut également être réalisé en verre.

Réalisé de préférence par dépôt de matière sur la face arrière du substrat translucide, le revêtement réfléchissant présente un coefficient de réflectivité d'au moins 30% (avantageusement compris entre 30 et 60 %) de sorte que l'image virtuelle 21 générée soit suffisamment lumineuse.

En variante, ce revêtement réfléchissant peut également être obtenu par un procédé de traitement de surface de la face arrière du substrat transparent.

Apposé avantageusement par sérigraphie sur la face avant du substrat transparent, le revêtement noir opaque s'étend sur les portions principale centrale 20A et supérieure 20B de la lame 20 mais pas sur ses portions latérales 20C et inférieure 20D qui demeurent donc transparentes, de sorte à assurer une transition moins marquée entre cette lame 20 et la paroi de fond de la planche de bord située au devant de cette lame, tout en donnant à cette même lame une impression de flottabilité particulièrement esthétique.

Ces portions latérales 20C et inférieure 20D transparentes présentent avantageusement une largeur d'au moins 20 mm de sorte à assurer un effet flottant optimal à la lame 20.

Par ailleurs et afin de faciliter l'accommodation des yeux du conducteur, ces dernières sont en outre de préférence séparées des parties principale centrale 20A et supérieure 20B de la lame 20 par des zones de transition 20E, 20F dont le degré d'opacité varie selon un dégradé allant du transparent à l'opaque.

Comme on peut le remarquer sur la figure 2, la partie supérieure 20B de la lame 20 intègre une pluralité de symboles informatifs 22 réalisés par grattage ou ablation laser du revêtement noir opaque.

Comme cela est le cas sur la lame représentée sur la figure 2, ces symboles informatifs 22 peuvent être constitués par des pictogrammes matérialisant en l'espèce l'usage des feux clignotants de changement de direction, la présence d'un danger et l'alerte d'entretien programmé.

Ces symboles informatifs 22 peuvent également être constitués par d'autres types de pictogrammes, des mots ou lettres matérialisant des fonctions en cours ou des alertes émises par le véhicule (feux de signalement, jauge de température ou de carburant, coussin gonflable de sécurité, etc...).

Les revêtements réfléchissant et opaque apposés respectivement sur les faces arrière et avant de la lame 20 peuvent être également recouverts chacun d'un vernis anti-reflets et/ou anti-rayures, voire d'un revêtement facilitant leur nettoyage.

Les moyens d'éclairage 30 comportent un boîtier 31 apposé contre la face avant de la partie supérieure opaque 20B de la lame 20 et logeant une carte à circuits imprimés 32 sur laquelle sont disposés une pluralité de diodes électroluminescentes assurant le retro-éclairage des symboles informatifs 22 ménagés sur la lame 20.

Ces diodes sont alimentées de façon sélective afin qu'apparaisse(nt) éclairé(s) sélectivement sur la lame 20 un ou plusieurs symbole(s) informatif(s) 22 en fonction des ordres de commande reçus par la carte et transmis par le boîtier de servitude intelligent (BSI) du véhicule.

Des entretoises, également non visibles sur la figure 1, sont interposées entre la carte à circuits imprimés 31 et la lame 20 afin de compartimenter les différentes zones d'éclairage associées chacune à un symbole informatif respectif 22 et d'éviter les fuites de lumière.

Du fait qu'il soit apposé contre une portion opaque de la face arrière de la lame 20, le boîtier d'éclairage 31 est entièrement dissimulé des yeux des passagers du véhicule et notamment de ceux du conducteur.

On notera que les symboles informatifs lumineux 22 situés dans le plan de la lame 20 apparaissent, aux yeux du conducteur du véhicule, de manière décalée longitudinalement vers l'avant par rapport aux informations présentes dans l'image virtuelles 21, ce qui permet de prioriser l'affichage de ces symboles associés à des informations essentielles.

Le combiné d'instruments numérique 1 comporte également un châssis 40 comprenant une embase sensiblement horizontale 41 portant l'écran d'affichage numérique 10, ainsi qu'un support 42 s'étendant en dessous de cette embase 41 et portant la lame réfléchissante 20.

L'embase 41 comprend des moyens de fixation permettant de solidariser rigidement le combiné d'instruments 1 à la casquette 2 de la planche de bord du véhicule. On notera que le support 42 portant la lame 20 s'étend au devant et en regard des portions principale centrale 20A et supérieure 20B opaques de cette lame 20 de sorte à demeurer invisible pour le conducteur.

Selon des variantes de réalisation non représentées, le support 42 du châssis 40 est monté articulé à pivotement vis-à-vis de l'embase 41. Des moyens motorisés sont également prévus pour ajuster son inclinaison (et donc celle de la lame 20) afin de s'adapter à la position des yeux du conducteur de sorte que celui-ci puisse visualiser l'intégralité de l'image virtuelle 21 générée par le combiné d'instruments 1.

Selon encore d'autres variantes de réalisation non représentées, le combiné d'instruments peut également comporter des modules d'affichage latéraux complémentaires agencés sur une paroi de fond de la planche de bord située au devant de la lame 20, de sorte à être visibles par le conducteur au travers des deux portions latérales transparentes de cette lame. 1

## Revendications

1. Combiné d'instruments pour véhicule automobile comportant un écran d'affichage numérique (10) destiné à être dissimulé de passagers dudit véhicule et étant apte à afficher une image source (11) contenant une multitude de modules indicateurs à destination d'un conducteur dudit véhicule, ainsi qu'une lame (20) située en dessous dudit écran d'affichage numérique (10) et dont au moins les portions principale centrale (20A) et supérieure (20B) sont opaques et réfléchissantes, ladite lame (20) étant inclinée vis-à-vis dudit écran d'affichage (10) de manière à réfléchir ladite image source (11) en direction dudit conducteur afin que ce dernier en perçoive dans son champ de vision une image virtuelle (21) située au devant de ladite lame (20), **caractérisé en ce que** les portions latérales (20C) et inférieure (20D) de ladite lame (20) sont transparentes.

2. Combiné d'instruments selon la revendication 1, **caractérisé en ce que** lesdites portions latérales (20C) et inférieure (20D) transparentes présentent une largeur d'au moins 20 mm.

3. Combiné d'instruments selon l'une des revendications 1 ou 2, **caractérisé en ce que** lesdites portions latérales (20C) et inférieure (20D) transparentes sont séparées de ladite portion principale centrale (20A) opaque par des zones de transition (20E, 20F) dont le degré d'opacité varie selon un dégradé allant du transparent à l'opaque.

4. Combiné d'instruments selon l'une des revendications 1 à 3, **caractérisé en ce qu'**il comporte également un châssis (40) comprenant une embase (41) portant ledit écran d'affichage numérique (10) ainsi qu'un support (42) relié à ladite embase (41) et portant ladite lame (20), ledit support (42) s'étendant au devant et en regard des portions principale centrale (20A) et supérieure (20B) opaques de ladite lame (20) de sorte à demeurer invisible pour le conducteur.

5. Combiné d'instruments selon l'une des revendications 1 à 4, **caractérisé en ce que** lesdites portions latérales (20C) et inférieure (20D) de ladite lame (20) sont également réfléchissantes.

6. Combiné d'instruments selon l'une des revendications 1 à 5, **caractérisé en ce qu'**il comporte une pluralité de symboles informatifs transparents (22) ménagés sur la portion supérieure opaque (20B) de ladite lame (20), ainsi que des moyens d'éclairage (30) apposés contre la face avant de cette portion supérieure opaque (20B) de ladite lame (20) de sorte à réaliser un rétro-éclairage desdits symboles informatifs (22).

7. Combiné d'instruments selon l'une des revendications 1 à 6, **caractérisé en ce que** ladite lame (20) est formée par un substrat translucide portant un revêtement opaque sur sa face avant et un revêtement réfléchissant sur sa face arrière.

8. Combiné d'instruments selon les revendications 6 et 7, **caractérisé en ce que** lesdits symboles informatifs transparents (22) sont réalisés par grattage ou ablation laser dudit revêtement opaque.

9. Combiné d'instruments selon les revendications 1 à 8, **caractérisé en ce qu'**il comporte également des modules d'affichage latéraux complémentaires agencés sur une paroi de fond de la planche de bord située au devant de ladite lame (20), de sorte à être visibles par ledit conducteur du véhicule au travers des deux dites portions latérales transparentes (20C) de cette lame (20).

10. Véhicule automobile **caractérisé en ce qu'**il comporte un combiné d'instruments selon l'une des revendications 1 à 9.

## Patentansprüche

1. Kombiinstrument für ein Kraftfahrzeug, umfassend einen digitalen Anzeigebildschirm (10), der vor den Passagieren des Fahrzeugs verborgen bleiben soll und in der Lage ist, ein Quellbild (11) anzuzeigen, das eine Vielzahl von Anzeigemodulen enthält, die für einen Fahrer des Fahrzeugs bestimmt sind Fahrzeug, sowie eine Klinge (20), die sich unterhalb des digitalen Anzeigebildschirms (10) befindet und von der zumindest der mittlere Hauptteil (20A) und der obere Teil (20B) undurchsichtig und reflektierend sind, wobei die Klinge (20) dazu geneigt ist an den Anzeigebildschirm (10), um das Quellbild (11) in Richtung des Fahrers zu reflektieren, so dass dieser in seinem Sichtfeld ein virtuelles Bild (21) wahrnimmt, das sich vor dem Schild (20) befindet, **dadurch gekennzeichnet, dass** die seitlichen (20C) und unteren (20D) Teile der Klinge (20) transparent sind.

2. Kombiinstrument nach Anspruch 1, **dadurch gekennzeichnet, dass** die transparenten seitlichen (20C) und unteren (20D) Abschnitte eine Breite von mindestens 20 mm haben.

3. Kombiinstrument nach einem der Ansprüche 1 oder 2, **dadurch gekennzeichnet, dass** die transparenten seitlichen (20C) und unteren (20D) Abschnitte von dem undurchsichtigen zentralen Hauptabschnitt (20A) durch Übergangszonen (20E, 20F) getrennt sind Der Grad der Deckkraft variiert je nach einem Farbverlauf von transparent zu undurchsichtig.

4. Kombiinstrument nach einem der Ansprüche 1 bis 3, **dadurch gekennzeichnet, dass** es außerdem ein Chassis (40) umfasst, das eine Basis (41) umfasst, die den digitalen Anzeigebildschirm (10) trägt, sowie einen damit verbundenen Träger (42). wobei die Basis (41) die Klinge (20) trägt und sich die Stütze (42) vor den undurchsichtigen Hauptabschnitten (20A) und oberen (20B) der Klinge (20) erstreckt und ihnen zugewandt ist, so dass sie für sie unsichtbar bleibt Treiber.

5. Kombiinstrument nach einem der Ansprüche 1 bis 4, **dadurch gekennzeichnet, dass** die seitlichen (20C) und unteren (20D) Teile des Blattes (20) ebenfalls reflektierend sind.

6. Kombiinstrument nach einem der Ansprüche 1 bis 5, **dadurch gekennzeichnet, dass** es mehrere transparente Informationssymbole (22) umfasst, die auf dem undurchsichtigen oberen Abschnitt (20B) des Flügels (20) vorgesehen sind, sowie Beleuchtungsmittel (30), das an der Vorderseite dieses undurchsichtigen oberen Abschnitts (20B) der Klinge (20) angebracht ist, um für eine Hintergrundbeleuchtung der Informationssymbole (22) zu sorgen.

7. Kombiinstrument nach einem der Ansprüche 1 bis 6, **dadurch gekennzeichnet, dass** die Klinge (20) aus einem durchscheinenden Substrat besteht, das auf seiner Vorderseite eine undurchsichtige Beschichtung und auf seiner Rückseite eine reflektierende Beschichtung trägt.

8. Kombiinstrument nach den Ansprüchen 6 und 7, **dadurch gekennzeichnet, dass** die transparenten Informationssymbole (22) durch Kratzen oder Laserabtragen der opaken Beschichtung erzeugt werden.

9. Kombiinstrument nach den Ansprüchen 1 bis 8, **dadurch gekennzeichnet, dass** es außerdem ergänzende seitliche Anzeigemodule umfasst, die an einer Bodenwand des Armaturenbretts vor dem Blatt (20) angeordnet sind, so dass sie für den Fahrer sichtbar sind das Fahrzeug durch die beiden transparenten Seitenteile (20C) dieser Klinge (20).

10. Kraftfahrzeug **dadurch gekennzeichnet, dass** es ein Kombiinstrument nach einem der Ansprüche 1 bis 9 umfasst.

## Claims

1. Instrument cluster for a motor vehicle comprising a digital display screen (10) intended to be hidden from passengers of said vehicle and being capable of displaying a source image (11) containing a multitude of indicator modules intended for a driver of said vehicle, as well as a blade (20) located below said digital display screen (10) and of which at least the main central (20A) and upper (20B) portions are opaque and reflective, said blade (20 ) being inclined with respect to said display screen (10) so as to reflect said source image (11) in the direction of said driver so that the latter perceives in his field of vision a virtual image (21) located in front of said blade (20), **characterized in that** the lateral (20C) and lower (20D) portions of said blade (20) are transparent.

2. Instrument cluster according to claim 1, **characterized in that** said transparent lateral (20C) and lower (20D) portions have a width of at least 20 mm.

3. Instrument cluster according to one of claims 1 or 2, **characterized in that** said transparent lateral (20C) and lower (20D) portions are separated from said opaque central main portion (20A) by transition zones (20E, 20F) whose degree of opacity varies according to a gradient going from transparent to opaque.

4. Instrument cluster according to one of claims 1 to 3, **characterized in that** it also comprises a chassis (40) comprising a base (41) carrying said digital display screen (10) as well as a support (42) connected to said base (41) and carrying said blade (20), said support (42) extending in front of and facing the main central (20A) and upper (20B) opaque portions of said blade ( 20) so as to remain invisible to the driver.

5. Instrument cluster according to one of claims 1 to 4, **characterized in that** said lateral (20C) and lower (20D) portions of said blade (20) are also reflective.

6. Instrument cluster according to one of claims 1 to 5, **characterized in that** it comprises a plurality of transparent informative symbols (22) provided on the opaque upper portion (20B) of said blade (20), as well as lighting means (30) placed against the front face of this opaque upper portion (20B) of said blade (20) so as to provide backlighting of said informative symbols (22).

7. Instrument cluster according to one of claims 1 to 6, **characterized in that** said blade (20) is formed by a translucent substrate bearing an opaque coating on its front face and a reflective coating on its rear face.

8. Instrument cluster according to claims 6 and 7, **characterized in that** said transparent informative symbols (22) are produced by scratching or laser ablation of said opaque coating.

9. Instrument cluster according to claims 1 to 8, **characterized in that** it also comprises complementary lateral display modules arranged on a bottom wall of the dashboard located in front of said blade (20) , so as to be visible to said driver of the vehicle through the two said transparent lateral portions (20C) of this blade (20).

10. Motor vehicle **characterized in that** it comprises an instrument cluster according to one of claims 1 to 9.
